# EUROPEAN PATENT APPLICATION

(11) **EP 0 687 410 A1**
(43) Date of publication of application: **20.12.1995**
(21) Application number: 95304046.6
(22) Date of filing: 12.06.1995
(51) Int. Cl.: A01G 3/053

(54) **Improved cutting device**

(30) Priority: 18.06.1994 GB 9412294
(71) Applicant: Black & Decker Inc., Newark Delaware 19711 (US)
(72) Inventor: Stones, Kevin, Bishop Auckland, County Durham DL14 6AE (GB)
(74) Representative: Stagg, Diana Christine

(57) **Abstract**

A hand-held, motor-driven cutting device, in particular, of the type in which the cutting member of the device (eg. cutter blades, chain) will rapidly come to a stand-still when decoupled from the drive of the motor. The device comprises;
means (6) for providing rotary driving power input at a first rotatable shaft (20);
speed reduction means for receiving the power input from the first shaft and delivering a relatively low speed rotary power output (40) and
drive means (66,120) for utilising the rotary power output of the speed reduction means to drive a cutting member (14,16,116).

The speed reduction means is contained within a ring gear element (32) coaxial with the first shaft (20) and is adapted to deliver the relatively low speed rotary power output (40) when the ring gear is restrained from rotation. The device further comprises restraining means (44,48) for restraining the ring gear (32) from rotation, which restraining means is selectively engageable.

## Description

The present invention relates to a hand-held, motor-driven cutting device, in particular, of the type in which the cutting member of the tool (eg. cutter blades, chain) will rapidly come to a stand-still when decoupled from the drive of the motor. Examples of such hand-held, motor-driven cutting devices are driven reciprocating blade type cutting devices and continuously driven chain type cutting devices.

Known cutting devices of this type generally include a speed reduction means to receive a rotary power input from a motor, and to deliver a relatively lower speed rotary power output which rotary output is used to drive the cutting member of the device such as a reciprocating blade or a continuously driven chain.

The speed reduction means typically used in the known devices is a speed reduction gear train comprising parallel axis gears and housed in a gear box. Since in operation, the device may generate high output torque especially if the operator attempts to use the cutter to cut material which is too thick or otherwise unsuitable, it is necessary for the gears to be manufactured from a material which is able to withstand the forces generated by such abuse of the cutting device, such as a hardened steel thus increasing the cost and weight of the unit. Attempts have been made to prevent the generation of excessive forces by providing a clutch mechanism, but this tends to increase costs. In addition, safety requirements are increasingly requiring the reduction of stop times, leading to the requirement for the provision of improved braking systems, again adding to the cost.

It is an object of the present invention to provide a hand-held, motor-driven cutting device of the type in which the cutting member will rapidly come to a stand-still when decoupled from the motor which drives it, in which the above disadvantages are reduced or substantially obviated.

The present invention therefore provides a hand-held, motor-driven cutting device, comprising;
means for providing rotary driving power input at a first rotatable shaft
speed reduction means for receiving the power input from the first shaft and delivering a relatively low speed rotary power output and
drive means for utilising the rotary power output of the speed reduction means to drive a cutting member, characterised in that the speed reduction means is contained within a ring gear element coaxial with the first shaft and is adapted to deliver the relatively low speed rotary power output when the ring gear is restrained from rotation and in that the device further comprises restraining means for restraining the ring gear from rotation, which restraining means is selectively engageable.

Thus, disengagement of the restraining means from the ring gear stops the drive from the motor being transmitted via the drive means to the cutting member. In cutting devices of the type in which the cutting member of the tool (eg. cutter blades, chain) will rapidly come to a stand-still when decoupled from the drive of the motor, disengagement of the restraining means from the ring gear causes rapid braking of the device.

The restraining means for restraining the ring gear from rotation preferably comprises a projection on the outer wall of the ring gear and a latch for engagement with the projection. The latch is preferably spring loaded and biased for engagement with the projection.

In a particularly preferred embodiment of a hand-held, motor-driven cutting device according to the invention, the latch is adapted to be moved into and out of engagement with the projection by means of an actuating mechanism. Where the means for providing rotary driving power input at the first rotatable shaft comprises an electric motor, the actuating mechanism by means of which the latch is moved into and out of engagement with the projection preferably also controls the supply of electrical power to the motor.

In a particularly preferred embodiment of a hand-held, motor-driven cutting device according to the invention a significant proportion of the components of the speed reduction means can be manufactured from synthetic plastics materials, thus reducing the cost and weight of the unit.

It is also possible by means of the speed reduction means used according to the invention to provide a higher gearing ratio, and hence degree of speed reduction, with a gear which is smaller than would be possible with a conventional parallel axis gear train.

The cutting member may comprise at least one reciprocating blade the reciprocation of which is driven by the drive means.

Alternatively, the cutting member may comprise a continuously driven chain which is driven by the drive means.

A preferred embodiment of a hedge trimmer and a chain saw according to the invention will now be described with reference to the accompanying drawings in which
Figure 1 is a view of a hedge trimmer;
Figure 2 is a side view, in section, of part of the hedge trimmer of Figure 1 showing the unit in the 'off' position;
Figure 3 is an exploded perspective view of part of the hedge trimmer of Figure 1;
Figures 4 to 6 are schematic views which show two alternative possible positions for the switch mechanism of the hedge trimmer of Figure 1;

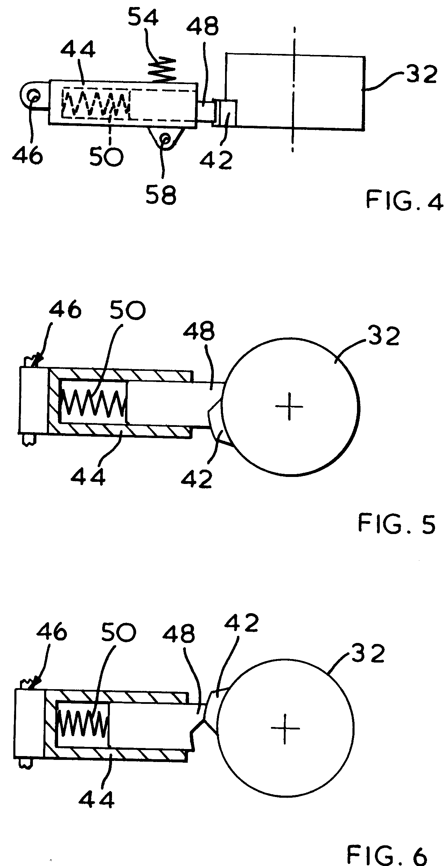

Figure 4 being a side view of part of the unit in the normal running position,
Figure 5 being a plan view of Figure 4,
Figure 6 is a similar view to that of Figure 5, in the overload position;

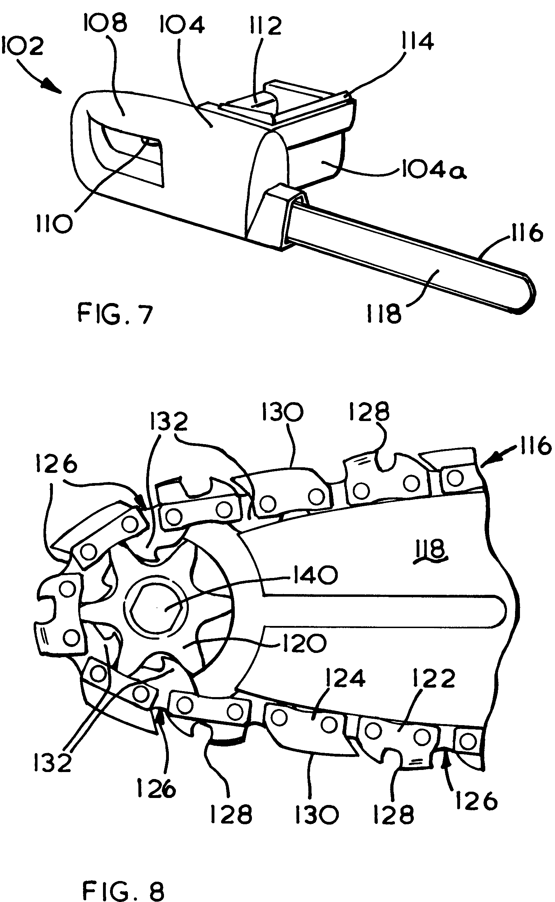

Figure 7 is a view of a chain saw; and
Figure 8 is a view of the drive mechanism of the chain saw in Figure 7.

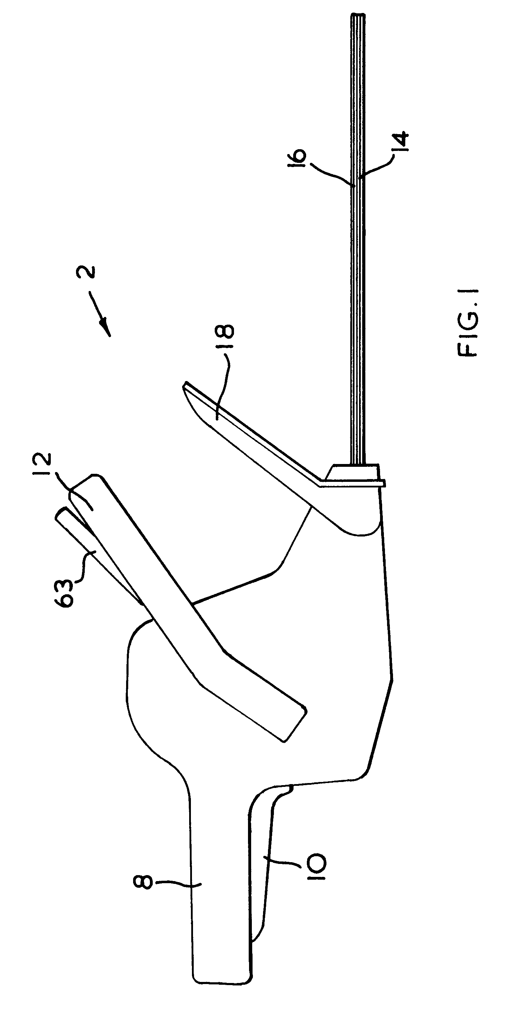

As can be seen from Figure 1, a hedge clipper shown generally at (2) comprises a housing (4) within which is located an electric motor (6). A primary handle (8) is provided with a trigger switch actuator (10). A secondary handle (12) is provided with an actuating mechanism (63). Two blades (14,16) are mounted in known manner in the housing (4) for driving by the motor (6). A guard (18) is mounted on the housing (4), also in known manner to protect the operator.

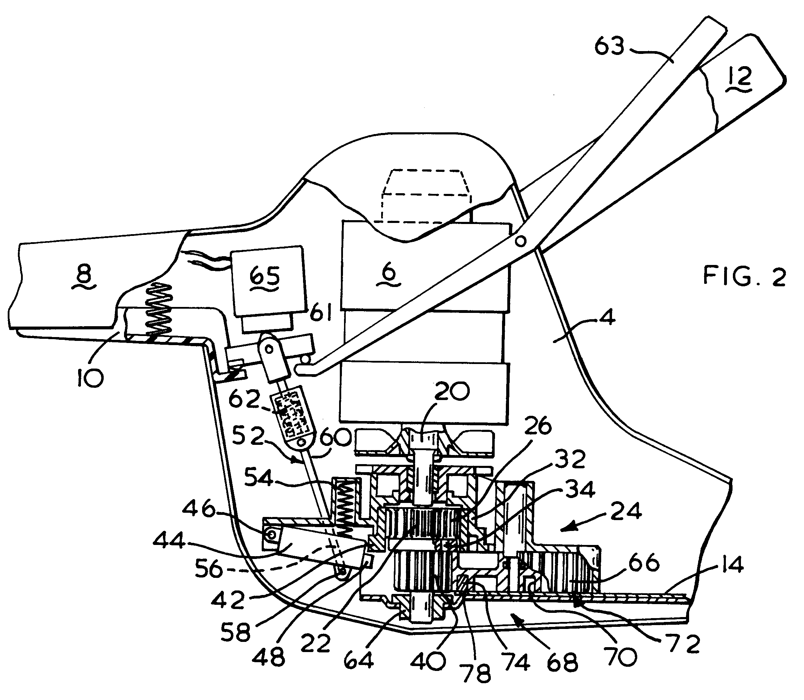

As can be seen from Figure 2, the motor (6) comprises an output shaft (20) which is secured to a sun gear (22) which forms part of a speed reduction gear train (24) comprising planetary gears (26,28,30) and a ring gear (32). The speed reduction gear train (24) is located within a gear box (25). The sun gear (22) engages with the gears of three planetary gears (26,28,30), the spindles (34,36,38) of which are in the form of needle rollers and are fixed in an output carrier (40). The planetary gears (26,28,30) also engage with the internal teeth of the ring gear (32).

A projection (42) is formed on the outer face of the ring gear (32).

A latch housing (44) is mounted on the gear box (25) and is pivoted at pivot point (46). A latch (48) is mounted in the latch housing (44) and is biased by a spring (50) away from the pivot point (46) towards the projection (42) of the ring gear (32).

A pull rod (52) is biased downwards (according to Figure 2) by a spring (54) acting on the latch housing (44) and the lower end (56) of the pull rod (52) engages with a location point (58) of the latch housing (44). The upper end (60) of the pull rod (52) is attached to the pivot point of a rocker arm (61) via a spring (62), and the pull rod (52) is simultaneously operable by the trigger switch actuator (10) and the auxiliary handle actuator (63). A switch mechanism (65) which is operable by the rocker arm (61) is connected in known manner to the control for the supply of electrical power to the motor (6).

The output carrier (40) is mounted in an output bearing (64) and engages with an output gear (66) which itself incorporates a reciprocation generating means (68) for converting the rotational output of the output gear (66) to a translational output to drive at least one blade (14,16).

The reciprocation generating means (68) may be any suitable reciprocation generating means, including known reciprocation generating means, but it is particularly preferred that the reciprocation generating means should be of the type described and claimed in our copending European patent application No ............. (applicant's reference F16768) of even date herewith.

In operation, when the unit is switched on by the operator, the latch housing (44) is pivoted by operation of the pull rod (52) from the non-engaged position shown in Figure 2 to the normal running position shown in Figures 4 and 5. The latch (48) engages the projection (42) so that the ring gear (32) is held against rotation, and drive is transmitted via the three planetary gears (26,28,30) and their spindles (34,36,38) to the output carrier (40).

The spring (62) is provided so that if the device should come to rest with the latch (48) located directly underneath the projection (42), The switch mechanism (65) can then be switched to supply electrical power to the motor (6), even though the latch housing (44) is locked against pivoting into the normal running position by the engagement of the latch (48) with the underside of the projection (42). As the motor (6) is switched on, the ring gear (32) and hence the projection (42) rotate, and the latch housing (44) is free to pivot into the normal running position.

If an overload occurs, the latch (48) is urged by the forces generated at the projection (42) against the spring (50) into the latch housing (44), out of engagement with the projection (42), as shown in Figure 6. The ring gear is then free to rotate and no drive is transmitted to the output carrier (40).

When the operator switches off the unit, the pull rod (52) is urged by the spring (54) towards the position shown in Figure 2, the latch housing (44) and hence the latch (48) is pivoted out of engagement with the projection (42) and no drive is transmitted to the output carrier (40), leading to rapid braking. The rapid braking occurs because of the reciprocating motion of the blades. Once the drive from the motor is removed the blades continue to move to the end of their stroke but there is no drive force to change the direction of the movement of the blades, hence they come to a stand-still.

Figure 7 shows a chain saw (102) comprising a housing (104) having a side projection (104a) which houses a motor. A primary handle (108) is provided with a trigger switch actuator (110). A chain (116), carried on a chain guide (118), is mounted in the conventional way to the housing (104) so that it driven by the motor. The front portion of the side projection (104a) acts as a safety guard for a user of the chain saw (102). A secondary handle (112) is provided with a safety braking mechanism activator (114).

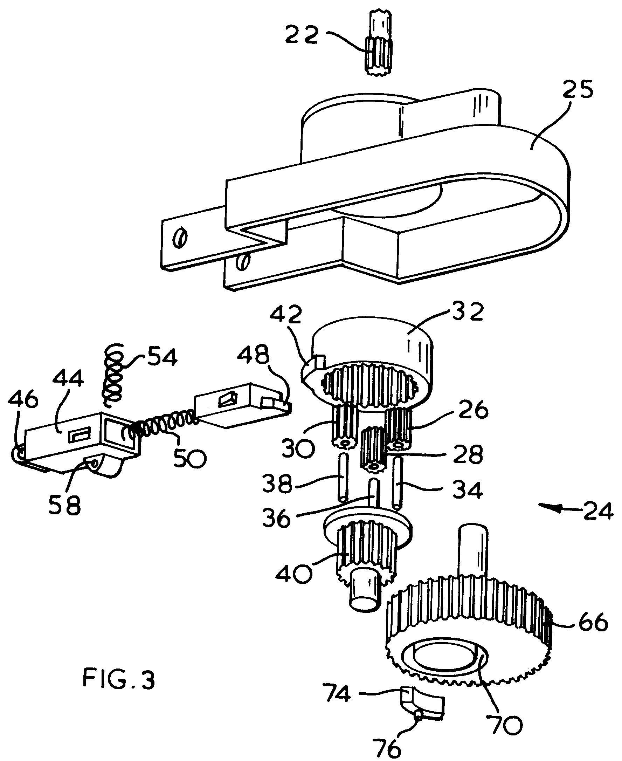

The motor is mounted in the side projection (104a) of the housing (104) in a known manner so that the drive shaft of the motor is horizontal. Thus, the axis of the output shaft from the motor is horizontal. The same gear arrangement and ring gear restraining means as is used in the hedge trimmer (2) as shown in Figures 2 and 3 is used in the chain saw (102) to convert the high speed output from the motor to a low speed output from the output carrier (140). However, because of the alignment of the motor the gear arrangement in the chain saw (102) is arranged on a substantially horizontal axis.

Referring now to Figure 8, the output carrier of the gear arrangement, which is equivalent to the output carrier (40) shown in Figures 1 and 2 (the position of which is shown at (140) in Figure 8) engages a sprocket wheel (120). The rotation of the sprocket wheel drives the chain (116) in a known manner. The chain (116) comprises alternating cutting and safety links (122,124) linked by drive links (126). The cutting links (122) incorporate cutting blade portions (128) and the safety links (124) incorporate safety extensions (130). Each of the drive links (126) incorporates a sprocket engaging lug (132). The sprocket wheel (120) engages the lugs (130) so that rotation of the sprocket wheel (130) drives the chain continuously.

In operation of the chain saw (102) the user grasps the primary handle (108) and the secondary handle (112). Depression of the trigger switch actuator (110) activates the motor and via a linkage mechanism (not shown) restrains the ring gear of the gear arrangement against rotation. An arrangement similar to that shown in Figure 2 can be utilised for this purpose. The output from the motor rotates a sun gear which transmits drive to the output carrier (140) via three planetary gears (arranged as shown in Figure 2).

When the user releases the trigger switch actuator (110) the ring gear is released via the linkage mechanism so that it is free to rotate and hence no drive is transmitted to the output carrier (140). This leads to rapid braking due to the frictional forces between the chain (116) and the chain guide (118). Due to these frictional force the chain (116) rapidly stops moving.

In the event of "kick back" in which the chain saw blade is flung upwards towards the user, the back of the user's hand which is holding the secondary handle (112) impacts the safety braking mechanism activator (114) to depress the activator. Depression of the activator is arranged, via a linkage mechanism (not shown) to disengage the restraining means from the ring gear so that no drive is transmitted to the output carrier (140) and the chain is rapidly braked.

## Claims

**1** A hand-held, motor-driven cutting device, comprising;
means (6) for providing rotary driving power input at a first rotatable shaft (20);
speed reduction means for receiving the power input from the first shaft and delivering a relatively low speed rotary power output and
drive means (66,120) for utilising the rotary power output of the speed reduction mean to drive a cutting member (14,16,116),
characterised in that the speed reduction means is contained within a ring gear element (32) coaxial with the first shaft (20) and is adapted to deliver the relatively low speed rotary power output when the ring gear (32) is restrained from rotation and in that the device further comprises restraining means (44,48) for restraining the ring gear from rotation, which restraining means is selectively engageable.

**2** A hand-held, motor-driven cutting device according to claim 1 characterised in that the restraining means for restraining the ring gear from rotation comprises a projection (42) on the outer wall of the ring gear and a latch (48) for engagement with the projection.

**3** A hand-held, motor-driven cutting device according to claim 2 characterised in that the latch (48) is spring loaded and biased for engagement with the projection (42).

**4** A hand-held, motor driven cutting device according to claim 2 or claim 3 characterised in that the latch (48) is adapted to be moved into and out of engagement with the projection (42) by means of a switch arrangement.

**5** A hand-held, motor-driven cutting device according to claim 4 characterised in that the means for providing rotary driving power input at the first rotatable shaft (20) comprises an electric motor (6) and the actuating mechanism by means of which the latch (48) is moved into and out of engagement with the projection (42) also controls the supply of electrical power to the motor.

**6** A hand-held, motor-driven cutting device according to any one of the preceding claims characterised in that the cutting member comprises at least one reciprocating blade (14,16).

**7** A hand-held, motor-driven cutting device according to any one of claims 1 to 5 characterised in that the cutting member comprises a continuously driven chain (116).

**8** A hand-held, motor-driven cutting device substantially as herein described with reference to the accompanying drawings.
